# EUROPEAN PATENT APPLICATION

(11) **EP 4 838 588 A1**
(43) Date of publication of application: **11.11.2026**
(21) Application number: 24937897.7
(22) Date of filing: 02.12.2024
(51) Int. Cl.: H01M 4/86, H01M 4/92, H01M 8/1004, H01M 8/10

(54) **COMPOSITION FOR FUEL CELL CATALYST LAYER, METHOD FOR PRODUCING SAME, ELECTRODE FOR FUEL CELL COMPRISING SAME, AND FUEL CELL**

(30) Priority: 29.04.2024 KR 20240056888; 29.11.2024 KR 20240175877
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Ka Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Vossius & Partner Patentanwälte Rechtsanwälte mbB
(86) International application number: PCT/KR2024/019484
(87) International publication number: WO 2025/230073

(57) **Abstract**

The present invention relates to a composition for a fuel cell catalyst layer, a method for producing same, an electrode for a fuel cell comprising same, and a fuel cell. By comprising a composite of a heat-dissipating material and an ionomer, the composition for a fuel cell catalyst layer can effectively reduce temperature rise in an electrode due to high thermal conductivity of the heat-dissipating material, and as a result, the composition for a fuel cell catalyst layer may provide an electrode for a fuel cell that can prevent degradation in durability and performance of the electrode caused by heat.

## Description

### Technical Field

The present disclosure relates to a composition for a fuel cell catalyst layer, a method for preparing the same, an electrode for a fuel cell including the same, and a fuel cell.

### Background Art

A fuel cell is a power generation system that directly converts chemical energy generated by a chemical reaction between hydrogen contained in hydrocarbon-based materials, such as methanol, ethanol, and natural gas, and oxygen, into electrical energy. Representative examples of such a fuel cell include polymer electrolyte membrane fuel cells (PEMFCs). The PEMFCs are gaining attention as next-generation energy sources, and are being actively studied for commercialization, particularly in the automotive sector, due to their advantages such as environmental friendliness.

In the fuel cell system, a membrane-electrode assembly (MEA) that substantially generates electricity has a structure in which an anode electrode (also referred to as a fuel electrode or an oxidation electrode) and a cathode electrode (also referred to as an air electrode or a reduction electrode) are positioned with a polymer electrolyte membrane interposed therebetween.

To summarize the reactions occurring in the polymer electrolyte fuel cell, when a fuel such as hydrogen gas is supplied to the anode electrode, hydrogen ions (H⁺) and electrons (e⁻) are generated at the anode electrode by hydrogen oxidation reaction. The generated hydrogen ions (H⁺) are transferred to the cathode electrode through the polymer electrolyte membrane, and the generated electrons (e⁻) are transferred to the cathode electrode through an external circuit. At the cathode electrode, oxygen is supplied and combines with hydrogen ions (H⁺) and electrons (e⁻), and water is produced by the oxygen reduction reaction. In this process, the external flow of electrons forms an electric current, generating electricity, and heat is also generated along with electricity.

Meanwhile, the polymer electrolyte membrane that is used as the electrolyte in the polymer electrolyte fuel cell must always remain hydrated to maintain hydrogen ion conductivity. However, when the temperature at the cathode electrode rises due to heat generated along with electricity during the operation of the fuel cell, the vapor pressure of water increases, making it easier for water vapor to evaporate into the outside air. For this reason, the amount of water retained in the membrane-electrode assembly decreases, which may degrade the performance of the fuel cell. In addition, as the temperature at the cathode electrode rises, the components constituting the membrane-electrode assembly may undergo deterioration such as deformation or degradation due to heat, which may reduce the durability or performance of the fuel cell. However, if an excessive amount of water is supplied to overcome the problem of temperature rise and water reduction, problems may arise in that it becomes difficult for reactant gases to access the porous catalyst surface, and at the reduction electrode, the mass transfer of the oxidant at the cathode electrode is limited, which significantly reduces the cell performance, and the contact between the catalyst and water increases, so that leaching of the metal catalyst particles from the catalyst occurs rapidly, which leads to a decrease in the durability of the catalyst.

### DISCLOSURE

### Technical Problem

The present disclosure is intended to provide a composition for a fuel cell catalyst layer capable of realizing an electrode for a fuel cell, which is capable of suppressing the temperature rise at the electrode caused by heat generation, and a method for preparing the same.

In addition, the present disclosure is intended to provide an electrode for a fuel cell, which is capable of suppressing the temperature rise at the electrode caused by heat generation.

In addition, the present disclosure is intended to provide a membrane-electrode assembly for a fuel cell, which overcomes the problem of temperature rise at the electrode caused by heat generation.

### Technical Solution

One embodiment of the present disclosure provides a composition for a fuel cell catalyst layer, comprising: a complex of a heat-dissipating material and an ionomer; and a catalyst.

According to one embodiment of the present disclosure, the heat-dissipating material may be coated with the ionomer.

According to one embodiment of the present disclosure, the area coated with the ionomer may be 50% or more and 100% or less of the total area of the heat-dissipating material.

According to one embodiment of the present disclosure, the thickness to which the heat-dissipating material is coated with the ionomer may be 1 nm or more and 10 nm or less.

According to one embodiment of the present disclosure, the heat-dissipating material may be in the form of nanotubes, nanofibers, or nanosheets.

According to one embodiment of the present disclosure, the heat-dissipating material may be in the form of nanosheets.

According to one embodiment of the present disclosure, the nanosheets may have a width of 30 nm or more and 300 nm or less.

According to one embodiment of the present disclosure, the content of the heat-dissipating material may be 5 parts by weight or more and 90 parts by weight or less, based on 100 parts by weight of the complex.

According to one embodiment of the present disclosure, the content of the complex may be 5 parts by weight or more and 50 parts by weight or less, based on 100 parts by weight of the composition for a fuel cell catalyst layer.

According to one embodiment of the present disclosure, the complex comprises at least one ionomer, wherein the ionomer may comprise at least one of a fluorinated proton conductor and a hydrocarbon-based proton conductor.

According to one embodiment of the present disclosure, the catalyst may comprise a carrier and metal particles supported on the carrier.

According to one embodiment of the present disclosure, the content of the catalyst may be 20 parts by weight or more and 80 parts by weight or less, based on 100 parts by weight of the composition for a fuel cell catalyst layer.

According to one embodiment of the present disclosure, the composition for a fuel cell catalyst layer may further comprise at least one additional ionomer, wherein the additional ionomer may be the same as or different from the above-described ionomer.

According to one embodiment of the present disclosure, the content of the additional ionomer may be 0.1 parts by weight or more and 50 parts by weight or less, based on 100 parts by weight of the composition for a fuel cell catalyst layer.

One embodiment of the present disclosure provides a method for preparing a composition for a fuel cell catalyst layer, comprising: a step of preparing a mixture by mixing a heat-dissipating material and an ionomer; a step of preparing a complex by heat-treating the mixture; and a step of mixing the complex with a catalyst.

According to one embodiment of the present disclosure, the heat treatment may be performed at a temperature of 120°C or higher and 180°C or lower for 0.1 to 3 hours.

One embodiment of the present disclosure provides an electrode for a fuel cell comprising the composition for a fuel cell catalyst layer.

One embodiment of the present disclosure provides a membrane-electrode assembly for a fuel cell, comprising: a polymer electrolyte membrane; an anode electrode provided on one side of the polymer electrolyte membrane; and a cathode electrode provided on the other side of the polymer electrolyte membrane, wherein at least one of the anode electrode and the cathode electrode is the electrode for a fuel cell.

### Advantageous Effects

As a composition for a fuel cell catalyst layer according to one embodiment of the present disclosure includes a complex of a heat-dissipating material and an ionomer, it may realize a fuel cell electrode with excellent thermal stability and durability.

As an electrode for a fuel cell according to one embodiment of the present disclosure includes a complex of a heat-dissipating material and an ionomer, it may effectively suppress a temperature rise at the electrode due to the high thermal conductivity of the heat-dissipating material and prevent the heat-induced degradation of the durability and performance of the electrode.

In addition, the electrode for a fuel cell according to one embodiment of the present disclosure may have excellent performance and durability as a strong bond is formed between the heat-dissipating material and the ionomer.

### Brief Description of Drawings

Fig. 1 is a schematic cross-sectional view showing a membrane-electrode assembly according to one embodiment of the present disclosure.
Fig. 2 is a schematic diagram showing the preparation of a complex having a strengthened bond between a heat-dissipating material and an ionomer according to one embodiment of the present disclosure and the preparation of an electrode using the same, wherein 2A relates to the use of graphene as the heat-dissipating material, and 2B relates to the use of boron nitride nanosheets.
Fig. 3 illustrates the overall configuration of a fuel cell according to one embodiment of the present disclosure.
Fig. 4 shows SEM images of electrodes prepared in Examples 1 and 2 of the present disclosure.
Fig. 5 shows the results of evaluating the cell performance of membrane-electrode assemblies manufactured in Examples 1 to 3 and Comparative Examples 1 to 6 of the present disclosure.

### Best Mode

Throughout the present specification, when any part is referred to as "including" any component, this means that the part does not exclude other component(s), but may further include other component(s), unless specifically stated otherwise.

Throughout the present specification, when any member is referred to as being placed "on" another member, this includes not only a case where any member is in contact with another member, but also a case where a third member exists between the two members.

Throughout the present specification, the unit "parts by weight" may mean the weight ratio between components.

Throughout the present specification, terms including ordinal numbers, such as "first" and "second," are used for the purpose of distinguishing one component from another component and are not limited by the ordinal numbers. For example, a first component may be referred to as a second component, and similarly, a second component may be referred to as a first component, without departing from the scope of the present disclosure.

Throughout the present specification, "at least one of a, b and c" may include a, b or c alone, or a combination of two or more selected from the group consisting of a, b and c.

An electrode for a fuel cell typically includes an electrode substrate and a catalyst layer formed on the surface of the electrode substrate, and may further include a microporous layer containing conductive fine particles, such as carbon powder or carbon black, between the electrode substrate and the catalyst layer in order to facilitate mass diffusion at the electrode substrate.

As the electrode substrate, a porous conductive substrate may be used to ensure a smooth supply of hydrogen or oxygen. Representative examples thereof include, but are not limited to, carbon paper, carbon cloth, carbon felt, or metal cloth (referring to a porous film composed of a fibrous metal cloth or a metal film formed on the surface of a cloth formed of polymer fibers). In addition, the electrode substrate is preferably subjected to water-repellent treatment with a fluorinated resin to prevent reactant diffusion efficiency from being reduced by water generated during fuel cell operation. As the fluorinated resin, polytetrafluoroethylene, polyvinylidene fluoride, polyhexafluoropropylene, polyperfluoroalkyl vinyl ether, polyperfluorosulfonylfluoride alkoxyvinyl ether, fluorinated ethylene propylene, polychlorotrifluoroethylene, or a copolymer thereof may be used.

As the electrode, the electrode disposed on one side of the polymer electrolyte membrane and causing an oxidation reaction that generates hydrogen ions and electrons from fuel transferred through the electrode substrate to the catalyst layer is referred to as an anode electrode, and the electrode disposed on the other side of the polymer electrolyte membrane and causing a reduction reaction that generates water from hydrogen ions supplied through the polymer electrolyte membrane and an oxidant transferred through the electrode substrate to the catalyst layer is referred to as a cathode electrode.

Hereinafter, the present disclosure will be described in more detail.

One embodiment of the present disclosure provides a composition for a fuel cell catalyst layer, including: a complex of a heat-dissipating material and an ionomer; and a catalyst.

As a composition for a fuel cell catalyst layer according to one embodiment of the present disclosure includes a complex of a heat-dissipating material and an ionomer, it may realize a fuel cell electrode with excellent thermal stability and durability.

Specifically, the complex included in an electrode for a fuel cell prepared using the composition for a fuel cell catalyst layer may be prepared through drying and heat treatment processes such that a strong bond is formed between the heat-dissipating material and the ionomer. Due to the strong bond between the ionomer and the heat-dissipating material, contact with the catalyst may be minimized, thereby inhibiting the metal catalyst particles from leaching out from the catalyst carrier as the catalyst is exposed to the ionomer and water. Thereby, the durability of the catalyst, and furthermore the durability and performance of the electrode, may be improved.

According to one embodiment of the present disclosure, the heat-dissipating material may be coated with the ionomer. Specifically, the surface of the heat-dissipating material may be coated with the ionomer. Additionally, the complex may be in a form in which the heat-dissipating material is impregnated with the ionomer.

According to one embodiment of the present disclosure, the area coated with the ionomer may be 50% or more and 100% or less of the total area of the heat-dissipating material. Specifically, an area of 50% or more and 100% or less of the total surface of the heat-dissipating material may be coated with the ionomer. Specifically, the area coated with the ionomer may be 55% or more and 95% or less, 60% or more and 95% or less, 65% or more and 95% or less, 75% or more and 95% or less, 80% or more and 95% or less, 50% or more and 85% or less, 60% or more and 85% or less, 65% or more and 85% or less, 70% or more and 85% or less, or 75% or more and 85% or less of the total area of the heat-dissipating material.

When the ratio of the area coated with the ionomer to the total area of the heat-dissipating material is within the above-described range, contact with the catalyst may be minimized, thereby inhibiting the metal catalyst particles from leaching out from the catalyst carrier as the catalyst is exposed to the ionomer and water. In addition, the effect of conducting ions may be properly exhibited, and characteristics such as the hydrogen ion conductivity of the ionomer, the effect of minimizing contact between the ionomer and the catalyst, and catalytic activity may be effectively realized.

According to one embodiment of the present disclosure, the thickness to which the heat-dissipating material is coated with the ionomer coating may be 1 nm or more and 10 nm or less. Specifically, the thickness of the ionomer coating layer formed on the heat-dissipating material may be 1 nm or more and 10 nm or less, 2 nm or more and 8 nm or less, 4 nm or more and 6 nm or less, 1 nm or more and 5 nm or less, 2.5 nm or more and 5 nm or less, 3.5 nm or more and 5 nm or less, 5 nm or more and 10 nm or less, or 7.5 nm or more and 8.5 nm or less. When the thickness to which the surface of the heat-dissipating material is coated with the ionomer is within the above-described range, contact with the catalyst may be minimized, thereby inhibiting the metal catalyst particles from leaching out from the catalyst carrier as the catalyst is exposed to the ionomer and water. In addition, the effect of conducting ions may be properly exhibited, and characteristics such as the hydrogen ion conductivity of the ionomer, the effect of minimizing contact between the ionomer and the catalyst, and catalytic activity may be effectively realized.

The term "heat-dissipating material" refers to a material functioning as a mediator to externally dissipate heat locally generated in devices and parts or to ensure efficient heat transfer in heat transfer paths, based on the thermal conductivity characteristics of the material allowing heat to flow from a high temperature region to a low temperature region within the material.

According to one embodiment of the present disclosure, the heat-dissipating material may include at least one of a ceramic-based structure and a carbon-based structure. The ceramic-based structure and the carbon-based structure have excellent thermal conductivity, and thus may have the effect of easily transferring heat to the outside of the catalyst layer and preventing moisture within the catalyst layer from evaporating.

According to one embodiment of the present disclosure, the ceramic-based structure may include at least one of boron nitrides, aluminum nitrides, silicon nitrides, titanium nitrides, silicon carbides, titanium carbides, tungsten carbides, silicon oxides, aluminum oxides, magnesium oxides, beryllium oxides, zinc oxides, titanium oxides, iron oxides, aluminum hydroxides, and magnesium hydroxides. In particular, among the boron nitrides mentioned above, hexagonal boron nitride (h-BN) has properties and a layered structure, which are similar to graphite, unlike common boron nitrides, and thus has excellent thermal conductivity, insulation properties, and chemical stability at high temperatures.

According to one embodiment of the present disclosure, the carbon-based structure may include at least one of graphene, graphite, expanded graphite, expandable graphite, carbon nanotubes, and carbon nanofibers. In particular, graphene and graphite have a layered structure (sheet form), and thus have excellent thermal conductivity, insulation properties, and chemical stability at high temperatures.

According to one embodiment of the present disclosure, the heat-dissipating material may be in the form of nanotubes, nanofibers, or nanosheets. When the heat-dissipating material in the above-described form is used, it is possible to achieve excellent thermal conductivity, insulation properties, and chemical stability at high temperatures. That is, the heat-dissipating material may include at least one of heat-dissipating material nanotubes, heat-dissipating material nanofibers, and/or heat-dissipating material nanosheets.

According to one embodiment of the present disclosure, the heat-dissipating material may be in the form of nanosheets. The heat-dissipating material in the form of nanosheets not only has excellent thermal conductivity, insulation properties, and chemical stability at high temperatures, but also is easily used to control electrode structures because the nanosheet form itself is easy to control and manufacture, and may be suitable for minimizing contact between the catalyst and the ionomer. Specifically, the heat-dissipating material may be in the form of hexagonal boron nitride (h-BN) nanosheets.

According to one embodiment of the present disclosure, the thermal conductivity of the heat-dissipating material may be 200 W/mK or more and 3,000 W/mK or less, 200 W/mK or more and 2,500 W/mK or less, 200 W/mK or more and 2,000 W/mK or less, 200 W/mK or more and 1,500 W/mK or less, 200 W/mK or more and 1,000 W/mK or less, or 200 W/mK or more and 800 W/mK or less. When the thermal conductivity of the heat-dissipating material is within the above-described range, the electrode for a fuel cell may have excellent thermal conductivity, and the temperature rise at the electrode caused by heat generation may be effectively suppressed.

According to one embodiment of the present disclosure, the nanosheets may have a width of 30 nm or more and 300 nm or less. Specifically, the width of the heat-dissipating material nanosheets may be 30 nm or more and 300 nm or less, 50 nm or more and 250 nm or less, 100 nm or more and 200 nm or less, 30 nm or more and 150 nm or less, or 130 nm or more and 300 nm or less. When the width of the nanosheets is within the above-described range, the nanosheets may have excellent thermal conductivity, insulation properties, and chemical stability at high temperatures, thereby providing an electrode for a fuel cell having excellent cell performance and durability. Additionally, when the width of the nanosheets is within the above-described range, the structure of the electrode for a fuel cell may be easily controlled, thereby increasing the heat-dissipating effect and improving performance and durability.

According to one embodiment of the present disclosure, the nanosheets may have a thickness of 5 nm or more and 100 nm or less, 10 nm or more and 80 nm or less, 15 nm or more and 65 nm or less, 20 nm or more and 50 nm or less, 5 nm or more and 50 nm or less, 10 nm or more and 40 nm or less, 15 nm or more and 35 nm or less, 20 nm or more and 30 nm or less, 50 nm or more and 100 nm or less, or 80 nm or more and 100 nm or less. When the thickness of the nanosheets is within the above-described range, the nanosheets may have excellent thermal conductivity, insulation properties, and chemical stability at high temperatures, thereby providing an electrode for a fuel cell having excellent cell performance and durability.

According to one embodiment of the present disclosure, the nanotubes and the nanofibers may each independently have a diameter of 50 nm or more and 500 nm or less, and a length of 300 nm or more and 3,000 nm or less. Specifically, the heat-dissipating material nanotubes and the heat-dissipating material nanofibers may each independently have a diameter of 100 nm or more and 500 nm or less, 100 nm or more and 400 nm or less, 150 nm or more and 300 nm or less, 50 nm or more and 350 nm or less, 100 nm or more and 300 nm or less, 150 nm or more and 250 nm or less, 200 nm or more and 500 nm or less, 200 nm or more and 400 nm or less, or 200 nm or more and 300 nm or less. In addition, the heat-dissipating material nanotubes and the heat-dissipating material nanofibers may each independently have a length of 500 nm or more and 2,000 nm or less, 700 nm or more and 1,500 nm or less, 1,000 nm or more and 1,300 nm or less, 300 nm or more and 2,000 nm or less, 500 nm or more and 1,800 nm or less, 750 nm or more and 1,500 nm or less, 1,000 nm or more and 3,000 nm or less, 1,000 nm or more and 2,500 nm or less, 1,000 nm or more and 2,000 nm or less, or 1,000 nm or more and 1,000 nm or less. When the diameter and length of each of the nanotubes and the nanofibers are within the above-described ranges, the nanotube and the nanofibers may have excellent thermal conductivity, insulation properties, and chemical stability at high temperatures, thereby providing an electrode for a fuel cell having excellent cell performance and durability. In addition, the agglomeration of the nanotubes and nanofibers may be effectively suppressed.

According to one embodiment of the present disclosure, the content of the heat-dissipating material may be 5 parts by weight or more and 90 parts by weight or less, based on 100 parts by weight of the complex. Specifically, the content of the heat-dissipating material may be, based on 100 parts by weight of the complex, 15 parts by weight or more and 90 parts by weight or less, 30 parts by weight or more and 90 parts by weight or less, 50 parts by weight or more and 90 parts by weight or less, 60 parts by weight or more and 90 parts by weight or less, 70 parts by weight or more and 90 parts by weight or less, or 60 parts by weight or more and 80 parts by weight or less. Meanwhile, the content of the heat-dissipating material may be 5 parts by weight or more and 90 parts by weight or less, based on 100 parts by weight of the solid content of a complex-forming mixture used to form the complex. Here, the solid content may mean the total content of the heat-dissipating material and the ionomer, except a solvent.

By controlling the content of the heat-dissipating material in the complex within the above-described range, the heat-dissipating effect may be effectively exhibited, and the hydrogen ion conductivity of the ionomer, the effect of minimizing contact between the ionomer and the catalyst, catalytic activity, etc. may be effectively improved.

According to one embodiment of the present disclosure, the ionomer may be a proton conductor having a proton exchange group or an anion conductor having an anion exchange group. The proton exchange group may include at least one of a sulfonic acid group, a carboxyl group, a boronic acid group, a phosphate group, an imide group, a sulfonimide group, a sulfonamide group, and a sulfonic acid fluoride group. In the proton conductor, H in the proton exchange group at the end of the side chain may be substituted with Na, K, Li, Cs, or tetrabutylammonium. The anion exchange group may include at least one of a hydroxyl ion, a carbonate, and a bicarbonate.

According to one embodiment of the present disclosure, the complex includes at least one ionomer, wherein the ionomer may include at least one of a fluorinated proton conductor and a hydrocarbon-based proton conductor. Specifically, the ionomer may include a fluorinated proton conductor having a sulfonic acid group and/or a carboxyl group, a hydrocarbon-based proton conductor having a sulfonic acid group and/or a carboxyl group, or a mixture thereof.

According to one embodiment of the present disclosure, the fluorinated proton conductor may include at least one of Nafion, Asiplex, Flemion, polyvinylidene fluoride, hexafluoropropylene, trifluoroethylene, polytetrafluoroethylene, or copolymers thereof. Examples of the hydrocarbon-based proton conductor include hydrocarbon-based polymers having the proton exchange group in their side chains, such as sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, and sulfonated polyarylene ether sulfone ketone.

According to one embodiment of the present disclosure, the content of the ionomer may be, based on 100 parts by weight of the complex, 10 parts by weight or more and 95 parts by weight or less, 10 parts by weight or more and 50 parts by weight or less, 20 parts by weight or more and 40 parts by weight or less, 10 parts by weight or more and 30 parts by weight or less, or 25 parts by weight or more and 50 parts by weight or less. Meanwhile, the content of the ionomer may be 10 parts by weight or more and 95 parts by weight or less, or 10 parts by weight or more and 50 parts by weight or less, based on 100 parts by weight of the solid content of a complex-forming mixture used to form the complex.

When the content of the ionomer in the complex is within the above-described range, the heat-dissipating effect may be prevented from decreasing, and the hydrogen ion conductivity of the ionomer, the effect of minimizing contact between the ionomer and the catalyst, and catalytic activity, etc. may be effectively improved.

According to one embodiment of the present disclosure, the content of the complex may be, based on 100 parts by weight of the composition for a fuel cell catalyst layer, 5 parts by weight or more and 50 parts by weight or less, 10 parts by weight or more and 40 parts by weight or less, 20 parts by weight or more and 30 parts by weight or less, 5 parts by weight or more and 30 parts by weight or less, or 20 parts by weight or more and 50 parts by weight or less. When the content of the complex in the composition for a fuel cell catalyst layer is within the above-described range, the electrode for a fuel cell may have improved catalytic activity and durability while effectively exhibiting a heat-dissipating effect.

According to one embodiment of the present disclosure, the catalyst may include a carrier and metal particles supported on the carrier. The metal particles may be any metal particles that may participate in the fuel cell reaction and be used as a catalyst for a fuel cell. Preferably, a platinum-based metal may be used.

According to one embodiment of the present disclosure, the platinum-based metal may include at least one selected from the group consisting of platinum (Pt), palladium (Pd), ruthenium (Ru), iridium (Ir), osmium (Os), a platinum-M alloy (where M is one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)), a non-platinum alloy, and combinations thereof, without being limited thereto, and any platinum-based metal may be used without limitation as long as it may be used in the art.

Specifically, the platinum-M alloy may be one or a mixture of two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and combinations thereof.

In addition, the non-platinum alloy may be one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and combinations thereof.

According to one embodiment of the present disclosure, the carrier may include at least one of a carbon-based carrier, zirconia, alumina, titania, silica, ceria, and zeolite.

The carbon-based carrier may be selected from among graphite, Super P, carbon fibers, carbon sheets, carbon black, ketjen black, denka black, acetylene black, carbon nanotubes (CNTs), carbon spheres, carbon ribbons, fullerenes, activated carbon, carbon nanofibers, carbon nanowires, carbon nanoballs, carbon nanohorns, carbon nanocages, carbon nanorings, ordered nano-/meso-porous carbon, carbon aerogel, mesoporous carbon, graphene, stabilized carbon, activated carbon, and combinations thereof, without being limited thereto, and any carrier that may be used in the art may be used without limitation.

The metal particles may be positioned on the surface of the carrier, or may penetrate into the carrier while filling the internal pores of the carrier.

When a metal supported on a carrier is used as the catalyst, a commercially available catalyst may be used, or a catalyst produced by supporting the metal on the carrier may be used. Since the process of supporting the metal on the carrier is widely known in the art, it can be easily understood by those skilled in the art even though detailed description thereof is omitted in the present specification.

According to one embodiment of the present disclosure, the diameter of the carrier may be 10 nm or more and 100 nm or less, or 15 nm or more and 60 nm or less. In addition, the carrier may have a pore size of 0.1 nm or more and 20 nm or less, or 2 nm or more and 15 nm or less.

The carbon-based structure as the heat-dissipating material may be of the same type as or of a different type from the carbon-based carrier used as the catalyst carrier described below, but the shape, size, or physical properties of the carbon-based structure as the heat-dissipating material may be different from those of the carbon-based carrier used as the catalyst carrier. For example, the carbon-based structure as the heat-dissipating material may be in a form in which metal particles exhibiting catalytic activity are not supported. Additionally, the carbon-based structure as the heat-dissipating material may be in the form of nanotubes, nanofibers, or nanosheets, but the carbon-based carrier may be in the form of spherical particles. Furthermore, the carbon-based structure as the heat-dissipating material may have an average width that is larger than that of the carbon-based carrier.

According to one embodiment of the present disclosure, the content of the catalyst may be, based on 100 parts by weight of the composition for a fuel cell catalyst layer, 20 parts by weight or more and 80 parts by weight or less, 30 parts by weight or more and 60 parts by weight or less, 40 parts by weight or more and 50 parts by weight or less, 20 parts by weight or more and 60 parts by weight or less, or 40 parts by weight or more and 80 parts by weight or less. When the content of the catalyst is within the above-described range, catalytic activity may be satisfied, and the reduction in the active area of the catalyst due to the agglomeration of the catalyst particles may be effectively suppressed.

According to one embodiment of the present disclosure, the composition for a fuel cell catalyst layer may further include at least one additional ionomer, wherein the additional ionomer may be the same as or different from the above-described ionomer. Specifically, the additional ionomer may include a fluorinated proton conductor having a sulfonic acid group and/or a carboxyl group, a hydrocarbon-based proton conductor having a sulfonic acid group and/or a carboxyl group, or a mixture thereof. In this case, when the same ionomer as the above-described ionomer is used as the additional ionomer, the hydrogen ion conductivity of the ionomer, the effect of minimizing contact between the ionomer and the catalyst, catalytic activity, etc. may be further improved. In addition, when the same ionomer as the above-described ionomer is used as the additional ionomer, the affinity between the ionomer and the additional ionomer may be increased, so that the increase in ion transfer resistance may be effectively suppressed while the bonding strength therebetween is maintained. Meanwhile, when a different ionomer from the above-described ionomer is used as the additional ionomer, the durability of the catalyst layer may be improved.

According to one embodiment of the present disclosure, the content of the additional ionomer may be, based on 100 parts by weight of the composition for a fuel cell catalyst layer, 0.1 parts by weight or more and 50 parts by weight or less, 5 parts by weight or more and 50 parts by weight or less, 10 parts by weight or more and 50 parts by weight or less, 25 parts by weight or more and 50 parts by weight or less, or 30 parts by weight or more and 50 parts by weight or less. When the content of the additional ionomer is within the above-described range, the ion transfer between the complex and the catalyst in the catalyst layer may be further improved.

According to one embodiment of the present disclosure, the complex may include a heat-treated product of a mixture of the heat-dissipating material and the ionomer. The complex may be prepared by mixing the heat-dissipating material and the ionomer, followed by heat treatment at a high temperature. Such high-temperature heat treatment may strengthen the bonding between the heat-dissipating material and the ionomer. Due to this strong bonding, contact between the ionomer and the catalyst may be minimized, thereby resolving the problem that the metal catalyst particles leach out from the catalyst due to such contact, which may improve the durability of the catalyst.

One embodiment of the present disclosure provides a method for preparing a composition for a fuel cell catalyst layer, including: step (a) of preparing a mixture by mixing a heat-dissipating material and an ionomer; step (b) of preparing a complex by heat-treating the mixture; and step (c) of mixing the complex with a catalyst.

Specifically, the method for preparing a composition for a fuel cell catalyst layer according to this embodiment may be a method for preparing the composition for a fuel cell catalyst layer according to the above-described embodiment. Accordingly, the heat-dissipating material, ionomer, complex, catalyst, catalyst layer, etc. in the method for preparing a composition for a fuel cell catalyst layer according to this embodiment may be the same as the heat-dissipating material, ionomer, complex, catalyst, catalyst layer, etc. in the composition for a fuel cell catalyst layer according to the above-described embodiment.

In step (a) above, the mixing may be performed using a solvent. The type of solvent used is not particularly limited, and an aqueous or alcoholic solvent may be used. The mixing may be performed, for example, by a mixing method selected from among planetary stirring, high-shear mixing, ultrasonic mixing, resonant acoustic mixing, and the like.

The method may further include, after step (a) and before step (b), a step of drying the mixture prepared in step (a). The drying may be performed at 60 to 110°C. The drying may be performed until the solvent is completely removed. The specific drying time may vary depending on the amount of solvent or the temperature, and a person skilled in the art can appropriately control the drying time in consideration of these factors.

In step (b) above, the heat treatment may be performed at 120°C to 180°C. Additionally, in step (b), the heat treatment may be performed for 0.1 to 3 hours. The specific heat treatment temperature and time are appropriately controlled in consideration of the types of heat-dissipating material and ionomer, the degree of bonding, etc. Specifically, as the heat treatment temperature and time increase, the bonding strength between the heat-dissipating material and the ionomer may increase. Here, the heat treatment temperature may be controlled to be equal to or lower than the glass transition temperature of the ionomer. Thereby, the ion conductivity of the complex may be prevented from decreasing. Meanwhile, the bonding strength between the heat-dissipating material and the ionomer may be measured, for example, by a method of redispersing the complex and measuring the amount of ionomer separated by centrifugation.

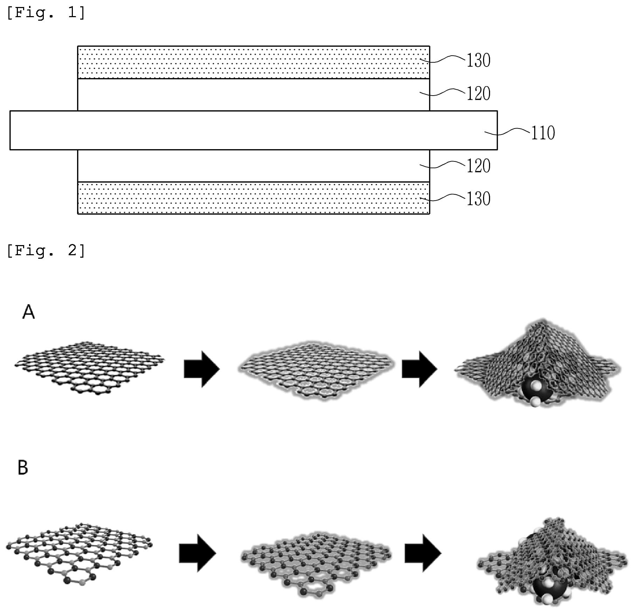

As shown in the first and second figures of Figs. 2A and 2B, through the heat treatment, the ionomer may be bonded to the heat-dissipating material (boron nitride, graphene, etc.) to form a complex.

In step (c) above, the mixing is performed by mixing the complex prepared in step (b) with a catalyst and a solvent. The composition for preparing an electrode, prepared by the mixing, may be applied onto a substrate, for example, a transfer substrate, by any method known in the art, such as electroplating, spray coating, inkjet printing, roll-to-roll printing, screen printing, or the like, thereby forming a catalyst layer. Specific conditions for forming the catalyst layer, such as electroplating conditions, spray pressure, drying temperature, drying time, etc., may be appropriately selected by a person skilled in the art.

The electrode prepared by the above-described preparation method may be bonded to a polymer electrolyte membrane to form a membrane-electrode assembly. The method of forming the catalyst layer on the polymer electrolyte membrane may be performed using any of a batch-type or roll-to-roll decal transfer method or a direct coating method.

One embodiment of the present disclosure provides an electrode for a fuel cell including the composition for a fuel cell catalyst layer. Specifically, the electrode for a fuel cell may include a catalyst layer including the composition for a fuel cell catalyst layer. That is, the electrode for a fuel cell may include a catalyst layer containing: a complex of a heat-dissipating material and an ionomer; and a catalyst.

Meanwhile, the heat-dissipating material, ionomer, complex, catalyst, and additional ionomer in the electrode for a fuel cell according to this embodiment may be the same as the heat-dissipating material, ionomer, complex, catalyst, and additional ionomer, respectively, included in the composition for a fuel cell catalyst layer according to the above-described embodiment.

As the electrode for a fuel cell according to one embodiment of the present disclosure includes the complex of the heat-dissipating material and the ionomer, it may effectively suppress the temperature rise at the electrode through the high thermal conductivity of the heat-dissipating material, and prevent the heat-induced degradation of the durability and performance of the electrode.

In addition, the electrode for a fuel cell according to one embodiment of the present disclosure may have excellent performance and durability as a strong bond is formed between the heat-dissipating material and the ionomer. Specifically, a strong ionic bond, hydrogen bond, and van der Waals bond may be formed between the heat-dissipating material and the ionomer.

According to one embodiment of the present disclosure, the content of the complex may be, based on 100 parts by weight of the catalyst layer, 5 parts by weight or more and 50 parts by weight or less, 10 parts by weight or more and 40 parts by weight or less, 20 parts by weight or more and 30 parts by weight or less, 5 parts by weight or more and 30 parts by weight or less, or 20 parts by weight or more and 50 parts by weight or less. When the content of the complex in the catalyst layer is within the above-described range, the electrode for a fuel cell may have improved catalytic activity and durability while effectively exhibiting a heat-dissipating effect.

According to one embodiment of the present disclosure, the content of the catalyst may be, based on 100 parts by weight of the catalyst layer, 20 parts by weight or more and 80 parts by weight or less, 30 parts by weight or more and 60 parts by weight or less, 40 parts by weight or more and 50 parts by weight or less, 20 parts by weight or more and 60 parts by weight or less, or 40 parts by weight or more and 80 parts by weight or less. When the content of the catalyst is within the above-described range, catalytic activity may be satisfied, and the reduction in the active area of the catalyst due to the agglomeration of the catalyst particles may be effectively suppressed.

According to one embodiment of the present disclosure, the catalyst layer may further include at least one additional ionomer. The content of the additional ionomer may be, based on 100 parts by weight of the catalyst layer, 0.1 parts by weight or more and 50 parts by weight or less, 5 parts by weight or more and 50 parts by weight or less, 10 parts by weight or more and 50 parts by weight or less, 25 parts by weight or more and 50 parts by weight or less, or 30 parts by weight or more and 50 parts by weight or less. When the content of the additional ionomer is within the above-described range, the ion transfer between the complex and the catalyst in the catalyst layer may be further enhanced.

According to one embodiment of the present disclosure, the electrode for a fuel cell may further include a second catalyst layer in addition to the above-described catalyst layer containing the complex. The second catalyst layer may have a higher content of the complex, or the second catalyst layer may be a catalyst layer consisting only of the complex. Here, the catalyst and ionomer contained in the second catalyst layer may be the same or different from the catalyst and ionomer of the above-described catalyst layer. In addition, since it is preferable that the heat-dissipating material be distributed adjacent to a gas diffusion layer (GDL), the catalyst layer may be disposed on the polymer electrolyte membrane so as to be adjacent to the polymer electrolyte membrane, and then the second catalyst layer may be disposed on the catalyst layer.

According to one embodiment of the present disclosure, the electrode for a fuel cell may have a thickness of 1 to 50 µm. If the thickness is less than 1 µm, the reaction area may be small, and thus activity may decrease, and if the thickness is more than 50 µm, the migration distance of ions and electrons may increase, and thus resistance may increase.

One embodiment of the present disclosure provides a membrane-electrode assembly for a fuel cell including: a polymer electrolyte membrane; an anode electrode provided on one side of the polymer electrolyte membrane; and a cathode electrode provided on the other side of the polymer electrolyte membrane, wherein at least one of the anode electrode and the cathode electrode is the above-described electrode for a fuel cell.

In the membrane-electrode assembly 100, the electrode disposed on one side of the polymer electrolyte membrane 110 and causing an oxidation reaction that generates hydrogen ions and electrons from fuel is referred to as an anode electrode, and the electrode causing a reduction reaction that generates water from hydrogen ions supplied through the polymer electrolyte membrane 110 and an oxidant of the electrode is referred to as a cathode electrode.

As at least one of the anode electrode and the cathode electrode 120, the above-described electrode for a fuel cell according to the present disclosure is used.

The polymer electrolyte membrane 110 is a solid polymer electrolyte with a thickness of 10 to 200 µm, and has an ion exchange function to move hydrogen ions generated at the anode electrode 120 to the cathode electrode 120.

The polymer electrolyte membrane 110 may be a hydrocarbon-based polymer electrolyte membrane, a fluorinated polymer electrolyte membrane, and a mixture or copolymer thereof.

The hydrocarbon-based polymer electrolyte membrane may include a hydrocarbon-based polymer, wherein the polymer may be selected from homopolymers or copolymers of styrene, imide, sulfone, phosphazene, ether-ether ketone, ethylene oxide, polyphenylene sulfide, or aromatic groups, and derivatives thereof, and these polymers may be used alone or in combination. Preparing an electrolyte membrane using a hydrocarbon polymer is cheaper and easier to prepare than using a fluorinated polymer, and the prepared electrolyte membrane exhibits high ion conductivity.

More preferably, the suitable hydrocarbon-based membrane may be at least one selected from the group consisting of a sulfonated polysulfone membrane, a sulfonated polyethersulfone membrane, a sulfonated polyetherketone membrane, a sulfonated poly(ether ether ketone) membrane, a sulfonated poly(arylene ether ether ketone) membrane, a sulfonated poly(arylene ether sulfone) membrane, a sulfonated poly(arylene ether benzimidazole) membrane, and a membrane into which an ion conductor has been introduced.

The fluorinated polymer electrolyte membrane may be used without particular limitation as long as it is a material having sufficient mechanical strength to form a film as an ion-conducting membrane as well as high electrochemical stability. Specific examples of fluorinated polymer electrolyte membranes include perfluorosulfonic acid resin, a copolymer of tetrafluoroethylene and fluorovinyl ether, and the like. The fluorovinyl ether moiety has a function of conducting hydrogen ions. The copolymer is commercially available from Dupont under the trade name Nafion.

The gas diffusion layer 130 is disposed between the membrane-electrode assembly and a separator plate of a fuel cell, and any gas diffusion layer used in the art may be used without limitation. For example, the gas diffusion layer 130 may include a conductive substrate selected from the group consisting of carbon paper, carbon cloth, and carbon felt. The gas diffusion layer may further include a microporous layer formed on one side of the conductive substrate, wherein the microporous layer may include a carbon-based material, such as carbon black or carbon nanotubes, or a fluorinated resin such as polytetrafluoroethylene or polyvinylidene fluoride (PVdF).

A fuel cell according to one embodiment of the present disclosure includes the membrane-electrode assembly and may be, for example, a fuel cell that uses hydrogen gas as fuel.

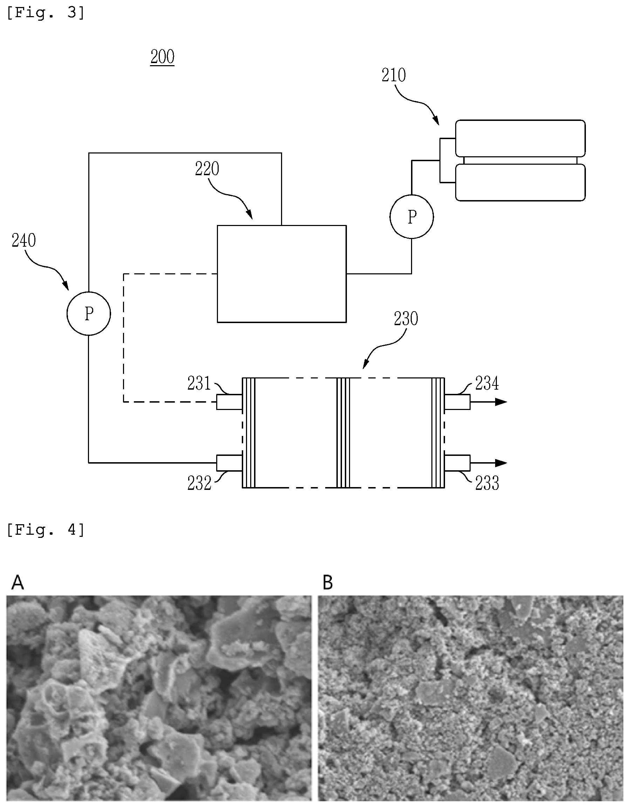

Fig. 3 is a schematic diagram illustrating the overall configuration of a fuel cell according to one embodiment of the present disclosure.

Referring to Fig. 3, a fuel cell 200 may include: a fuel supply unit 210 configured to supply a mixed fuel composed of fuel and water; a reforming unit 220 configured to reform the mixed fuel to generate a reformed gas containing hydrogen gas; a stack 230 configured to generate electrical energy by causing an electrochemical reaction between the reformed gas containing hydrogen gas supplied from the reforming unit 220 and an oxidant; and an oxidant supply unit 240 configured to supply an oxidant to the reforming unit 220 and the stack 230.

The stack 230 may include a plurality of unit cells that generate electrical energy by inducing an oxidation/reduction reaction between the reformed gas containing hydrogen gas supplied from the reforming unit 220 and the oxidant supplied from the oxidant supply unit 240.

Each unit cell means a unit cell that generates electricity, and may include a membrane-electrode assembly that oxidizes/reduces the reformed gas containing hydrogen gas and the oxygen of the oxidant, and separator plates (also called bipolar plates, hereinafter referred to as "separator plates") for supplying the reformed gas containing hydrogen gas and the oxidant to the membrane-electrode assembly. The separator plates are disposed on both sides of the membrane-electrode assembly. At this time, the separator plates located at the outermost sides of the stack, respectively, are also specifically referred to as end plates.

Among the separator plates, one end plate includes a pipe-shaped first supply tube 231 for injecting the reformed gas containing hydrogen gas supplied from the reforming unit 220, and a pipe-shaped second supply tube 232 for injecting oxygen gas, and the other end plate includes a first discharge tube 233 for discharging the remaining unreacted reformed gas containing hydrogen gas from the plurality of unit cells to the outside, and a second discharge tube 234 for discharging the remaining unreacted oxidant from the unit cells to the outside.

### Mode for Invention

Hereinafter, specific examples of the present disclosure will be presented. However, the examples described below are merely for the purpose of illustrating or explaining the present disclosure in detail and the present disclosure is not limited thereto. Furthermore, contents not described herein may be sufficiently technically inferred by those skilled in the art, and thus description thereof will be omitted.

### Preparation of Complexes

### Preparation Example 1: Preparation of Complex A (Use of First Hexagonal Boron Nitride Nanosheets)

Nafion D2021, a fluorinated proton conductor, was prepared as an ionomer, and hexagonal boron nitride nanosheets (width: 150 nm; thermal conductivity: 600 W/mK; thickness: 20 nm) were prepared as a heat-dissipating material.

Subsequently, the ionomer and the heat-dissipating material were added to a mixed solvent of distilled water to ethanol (80:20 v/v), thereby preparing a mixture for forming a complex. At this time, based on 100 parts by weight of the solid content (ionomer and heat-dissipating material) of the mixture, the content of the heat-dissipating material was 70 parts by weight and the content of the ionomer was 30 parts by weight.

Thereafter, the mixture was stirred using a high-shear mixer at a stirring speed of 6,500 rpm for 1 hour. Next, the mixture was dried at a temperature of 90°C for 6 hours, and then heat-treated in an oven at a temperature of 150°C for 2 hours, thereby preparing complex A. At this time, 80% of the total surface area of the heat-dissipating material was coated with the ionomer, and the thickness of the ionomer coating layer was 4.0 nm.

### Preparation Example 2: Preparation of Complex B (Use of Graphene)

Complex B was prepared in the same manner as in Preparation Example 1, except that graphene (width: 150 nm; thermal conductivity: 800 W/mK; thickness: 15 nm) was used as a heat-dissipating material. At this time, 82% of the total surface area of the heat-dissipating material was coated with the ionomer, and the thickness of the ionomer coating layer was 4.2 nm.

### Preparation Example 3: Preparation of Complex C (Use of Carbon Nanotubes)

Complex C was prepared in the same manner as in Preparation Example 1, except that carbon nanotubes (diameter: 200 nm; length: 1 µm; thermal conductivity: 460 W/mK) were used as a heat-dissipating material. At this time, 79% of the total surface area of the heat-dissipating material was coated with the ionomer, and the thickness of the ionomer coating layer was 3.8 nm.

### Preparation Example 4: Preparation of Complex D (Use of Second Hexagonal Boron Nitride Nanosheets)

Complex D was prepared in the same manner as in Preparation Example 1, except that hexagonal boron nitride nanosheets (width: 350 nm; thermal conductivity: 180 W/mK; thickness: 25 nm) were used as a heat-dissipating material. At this time, 60% of the total surface area of the heat-dissipating material was coated with the ionomer, and the thickness of the ionomer coating layer was 2.9 nm.

### Preparation Example 5: Preparation of Complex E (Use of First Hexagonal Boron Nitride Nanosheets)

In Preparation Example 1 above, based on 100 parts by weight of the solid content (ionomer and heat-dissipating material) of the mixture, the content of the heat-dissipating material was 95 parts by weight and the content of the ionomer was 5 parts by weight. At this time, 15% of the total surface area of the heat-dissipating material was coated with the ionomer, and the thickness of the ionomer coating layer was 0.6 nm.

### Manufacture of Membrane-Electrode Assemblies

### Example 1

A catalyst composed of a platinum-based catalyst (TEC10E50E) supported on a carbon black carrier having a particle diameter of about 40 nm was prepared. Nafion D2021, a fluorinated proton conductor, was prepared as an additional ionomer. Subsequently, the catalyst, the additional ionomer, and complex A prepared in Preparation Example 1 were mixed together, thereby preparing a composition for a fuel cell catalyst layer. At this time, based on 100 parts by weight of the composition for a fuel cell catalyst layer, the content of the complex was 20 parts by weight, the content of the catalyst was 40 parts by weight, and the content of the additional ionomer was 40 parts by weight.

Thereafter, the composition for a fuel cell catalyst layer was applied to a transfer substrate by spray coating, thereby preparing a catalyst layer (thickness: 15 µm). The catalyst layer was dried, and then transferred to both sides of a polymer electrolyte membrane (Nafion) to obtain a membrane-electrode assembly having an electrode/polymer electrolyte membrane/electrode structure.

### Example 2

A membrane-electrode assembly was obtained in the same manner as in Example 1, except that complex B prepared in Preparation Example 2 was used.

### Example 3

A membrane-electrode assembly was obtained in the same manner as in Example 1, except that complex C prepared in Preparation Example 3 was used.

### Comparative Example 1: Conventional Membrane-Electrode Assembly

A membrane-electrode assembly was manufactured in the same manner as in Example 1, except that the heat-dissipating material and the complex of the heat-dissipating material and the ionomer were not used (catalyst content: ionomer content: 1:1).

### Comparative Example 2: Membrane-Electrode Assembly to which Heat-Dissipating Material Was Simply Added

A membrane-electrode assembly was manufactured in the same manner as in Example 1, except that hexagonal boron nitride nanosheets (width: 150 nm; thermal conductivity: 600 W/mK; thickness: 20 nm), which are a heat-dissipating material, were used alone instead of the complex of the heat-dissipating material and the ionomer.

### Comparative Example 3: Manufacturing of Membrane-Electrode Assembly to which Heat-Dissipating Material having Low Thermal Conductivity Was Added

A membrane-electrode assembly was obtained in the same manner as in Example 1, except that complex D prepared in Preparation Example 4 was used.

### Comparative Example 4

A membrane-electrode assembly was obtained in the same manner as in Example 1, except that complex E prepared in Preparation Example 5 was used.

### Comparative Example 5

A membrane-electrode assembly was obtained in the same manner as in Example 1, except that, based on 100 parts by weight of the composition for a fuel cell catalyst layer, the content of the complex was controlled to 1 part by weight, the content of the catalyst to 40 parts by weight, and the content of the additional ionomer to 59 parts by weight.

### Comparative Example 6

A membrane-electrode assembly was obtained in the same manner as in Example 1, except that, based on 100 parts by weight of the composition for a fuel cell catalyst layer, the content of the complex was controlled to 50 parts by weight, the content of the catalyst to 10 parts by weight, and the content of the additional ionomer to 40 parts by weight.

### [Evaluation Example 1] Analysis of Electrode Morphology by SEM Analysis

SEM analysis was performed to analyze the morphologies of the electrodes prepared in Example 1 and Example 2.

Fig. 4 shows SEM images of the electrodes prepared in Example 1 and Example 2 of the present disclosure. Specifically, Fig. 4A is an SEM image of the electrode prepared in Example 1, and Fig. 4B is an SEM image of the electrode prepared in Example 2.

Referring to Fig. 4, it can be seen that, in the electrodes prepared in Example 1 and Example 2, the sheet-shaped heat-dissipating material was evenly distributed together with the catalyst particles in the electrode.

### [Evaluation Example 2] Evaluation of Durability of Electrodes

Evaluation of the durability of the electrodes prepared in Examples 1 to 3 and Comparative Examples 1 to 6 was performed according to the DOE protocol, and the results are shown in Tables 1 and 2 below.

Specifically, the catalyst durability evaluation protocol of the U.S. Department of Energy (DOE) was used to evaluate the catalyst durability of the membrane-electrode assemblies.

- Evaluation conditions: Voltage loss was evaluated after performing 10,000 cycles in the range of 0.6 to 1.0 V at a rate of 50 mV/s under atmospheric pressure with an anode flow rate of 100 ccm/cathode flow rate of 37.5 ccm under H₂/N₂ gas at 80°C.

**[Table 1]**

| Sample | Example 1 | Example 2 | Example 3 |
|---|---|---|---|
| Voltage loss | 13 mV | 12 mV | 18 mV |

**[Table 2]**

| Sample | Comp. Example 1 | Comp. Example 2 | Comp. Example 3 | Comp. Example 4 | Comp. Example 5 | Comp. Example 6 |
|---|---|---|---|---|---|---|
| Voltage loss | 46 mV | 40 mV | 38 mV | 32 mV | 38 mV | 27 mV |

Referring to Table 1 and Table 2 above, it was confirmed that Examples 1 to 3 of the present disclosure showed a lower voltage loss than Comparative Examples 1 to 6, indicating that they have better durability.

### [Evaluation Example 3] Cell Performance Evaluation: Results of Evaluation under Conditions of 80°C and 50% RH

Cell performance evaluation was performed on the MEAs manufactured in Examples 1 to 3 and Comparative Examples 1 to 6.

Specifically, unit cell evaluation was performed using a Scribner 850 fuel cell test system. Performance evaluation was performed by measuring the voltage as a function of the current density (mA/cm²) under conditions of 80°C, 50% RH, and atmospheric pressure.

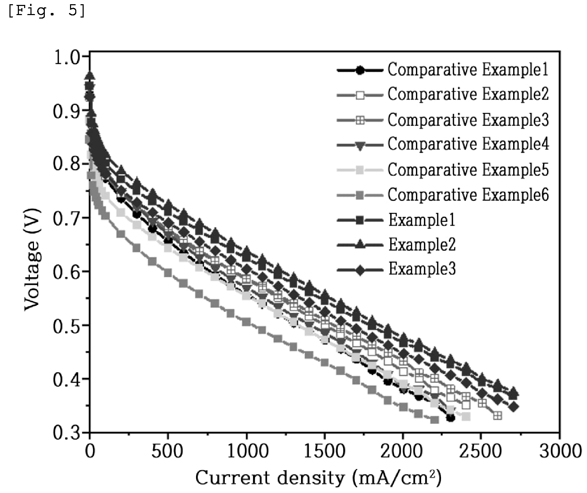

Fig. 5 shows the results of evaluating the cell performance of the membrane-electrode assemblies manufactured in Examples 1 to 3 and Comparative Examples 1 to 6 of the present disclosure.

Referring to Fig. 5, it was confirmed that the results of evaluating the cell performance of the membrane-electrode assemblies manufactured in Examples 1 to 3 of the present disclosure were better than those in Comparative Examples 1 to 6.

### [Description of Reference Numerals]

| | | | |
|---|---|---|---|
| 100: | membrane-electrode assembly | | |
| 110: | polymer electrolyte membrane | | |
| 120: | anode electrode and cathode electrode | | |
| 130: | gas diffusion layer | | |
| 200: | fuel cell | | |
| 210: | fuel supply unit | 220: | reforming unit |
| 230: | stack | 231: | first supply tube |
| 232: | second supply tube | 233: | first discharge tube |
| 234: | second discharge tube | 240: | oxidant supply unit |

## Claims

1. A composition for a fuel cell catalyst layer, comprising:
a complex of a heat-dissipating material and an ionomer; and
a catalyst.

2. The composition for a fuel cell catalyst layer according to claim 1, wherein the heat-dissipating material is coated with the ionomer.

3. The composition for a fuel cell catalyst layer according to claim 1, wherein an area coated with the ionomer is 50% or more and 100% or less of a total area of the heat-dissipating material.

4. The composition for a fuel cell catalyst layer according to claim 1, wherein a thickness to which the heat-dissipating material is coated with the ionomer is 1 nm or more and 10 nm or less.

5. The composition for a fuel cell catalyst layer according to claim 1, wherein the heat-dissipating material is in the form of nanotubes, nanofibers, or nanosheets.

6. The composition for a fuel cell catalyst layer according to claim 5, wherein the nanosheets have a width of 30 nm or more and 300 nm or less.

7. The composition for a fuel cell catalyst layer according to claim 1, wherein a content of the heat-dissipating material is 5 parts by weight or more and 90 parts by weight or less, based on 100 parts by weight of the complex.

8. The composition for a fuel cell catalyst layer according to claim 1, wherein a content of the complex is 5 parts by weight or more and 50 parts by weight or less, based on 100 parts by weight of the composition for a fuel cell catalyst layer.

9. The composition for a fuel cell catalyst layer according to claim 1,
wherein the complex comprises at least one ionomer, and
wherein the ionomer comprises at least one of a fluorinated proton conductor and a hydrocarbon-based proton conductor.

10. The composition for a fuel cell catalyst layer according to claim 1, wherein the catalyst comprises a carrier and metal particles supported on the carrier.

11. The composition for a fuel cell catalyst layer according to claim 1, wherein a content of the catalyst is 20 parts by weight or more and 80 parts by weight or less, based on 100 parts by weight of the composition for a fuel cell catalyst layer.

12. The composition for a fuel cell catalyst layer according to claim 1, further comprising at least one additional ionomer,
wherein the additional ionomer is the same as or different from the ionomer.

13. The composition for a fuel cell catalyst layer according to claim 12, wherein a content of the additional ionomer is 0.1 parts by weight or more and 50 parts by weight or less, based on 100 parts by weight of the composition for a fuel cell catalyst layer.

14. A method for preparing a composition for a fuel cell catalyst layer, comprising:
a step of preparing a mixture by mixing a heat-dissipating material and an ionomer;
a step of preparing a complex by heat-treating the mixture; and
a step of mixing the complex with a catalyst.

15. The method for preparing a composition for a fuel cell catalyst layer according to claim 14, wherein the heat-treating is performed at a temperature of 120°C or higher and 180°C or lower for 0.1 to 3 hours.

16. An electrode for a fuel cell, comprising the composition for a fuel cell catalyst layer according to claim 1.

17. A membrane-electrode assembly for a fuel cell, comprising:
a polymer electrolyte membrane;
an anode electrode provided on one side of the polymer electrolyte membrane; and
a cathode electrode provided on the other side of the polymer electrolyte membrane,
wherein at least one of the anode electrode and the cathode electrode is the electrode for a fuel cell according to claim 16.
